(19)

Europäisches
Patentamt

European
Patent Office

Office européen
des brevets

(11) **EP 4 556 266 A1**

(12) **EUROPEAN PATENT APPLICATION**

(43) Date of publication:
**21.05.2025 Bulletin 2025/21**

(21) Application number: **24177054.4**

(22) Date of filing: **21.05.2024**

(51) International Patent Classification (IPC):
***B60G 17/052*** *(2006.01)*

(52) Cooperative Patent Classification (CPC):
**B60G 11/27; B60G 17/017; B60G 17/052;**
B60G 2202/152; B60G 2300/042;
B60G 2400/51222; B60G 2400/61; B60G 2500/20

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **15.11.2023 EP 23210070**

(71) Applicant: **VOLVO TRUCK CORPORATION
405 08 Göteborg (SE)**

(72) Inventors:
• **OSCARSSON, Christian
444 47 STENUNGSUND (SE)**

• **LÖFWENBERG, Richard
417 21 GÖTEBORG (SE)**
• **FAGERGREN, Mats
442 35 KUNGÄLV (SE)**
• **RUNDQVIST, Carl-Johan
441 43 ALINGSÅS (SE)**
• **HOLMEN, Charlotte
423 49 GÖTEBORG (SE)**

(74) Representative: **Ström & Gulliksson AB
P.O. Box 4188
203 13 Malmö (SE)**

Remarks:
Amended claims in accordance with Rule 137(2)
EPC.

(54) **VERTICAL COUPLING LOADS FOR VEHICLE COMBINATIONS**

(57) A computer system for controlling a vertical load on a coupling between units of a vehicle combination comprising a trailing unit and a preceding unit, wherein the trailing unit comprises two or more axles and is coupled to the preceding unit via the coupling, the computer system comprising processing circuitry configured to: acquire a current value of a vertical load on the coupling; determine a coupling load capability based on the current value of the vertical load on the coupling and a current value of a virtual wheelbase of the trailing unit; and determine a desired vertical load on the coupling based on the coupling load capability.

**EP 4 556 266 A1**

300

Acquiring a current value of a vertical load on a coupling between units of a vehicle combination — 302

Determining a coupling load capability based on the current value of the vertical load and a current value of a virtual wheelbase of the trailing unit — 304

Determining a desired vertical load on the coupling based on the coupling load capability — 306

Providing the desired vertical load by adjusting the load on at least one axle of the trailing unit — 308

**FIG. 3**

**Description**

**TECHNICAL FIELD**

The disclosure relates generally to vehicle control. In particular aspects, the disclosure relates to vertical coupling loads for vehicle combinations. The disclosure can be applied in heavy-duty vehicles, such as trucks, buses, and construction equipment. In particular, the disclosure can be applied in multi-unit vehicle combinations with distributed propulsion and energy storage. Although the disclosure may be described with respect to a particular vehicle, the disclosure is not restricted to any particular vehicle.

**BACKGROUND**

In motion management of multi-unit vehicle combinations, various regulations exist governing the maximum allowable load for axles of a tractor or a trailer. In some countries, a limit of 10 tons per axle, or 11.5 tons per driven axle may be set. In some countries, exceeding this limit by up to 30% is allowed when the truck/trailer is intended to be moving at a speed that is less than a given threshold (e.g., 30 kph). Other regulations may exist, but they tend to include a maximum load per axle, as this may be a relevant factor for the safety of the vehicle and the longevity of road surfaces.

This limits the amount of load that can be carried by a trailer, therefore limiting operational efficiency. Furthermore, although electric vehicles, and in particular electric tractors, may be heavier than internal combustion engine vehicles, the same load limit may apply to these vehicles. Therefore, the payload that can be loaded in the trailers of electric vehicles may need to be lower than for internal combustion engine vehicles, further reducing the operational efficiency. Axle loads can also have an impact on traction of the vehicle combination.

It is therefore desired to develop a solution for vehicle motion management that addresses or at least mitigates some of these issues.

**SUMMARY**

This disclosure provides systems, methods and other approaches for controlling a vertical load on a coupling between units of a vehicle combination. In particular, a current value of a vertical load on the coupling is acquired. Based on the current value of the vertical load on the coupling and a current value of a virtual wheelbase of a trailing unit, a maximum and/or minimum load capability for the coupling can be determined. Based on the coupling load capability, a desired vertical load on the coupling can be determined. The desired vertical load can then be set based on a desired outcome, for example an increase in the load that can be carried by the trailing unit, or a redistribution of traction between the units.

According to a first aspect of the disclosure, there is provided a computer system for controlling a vertical load on a coupling between units of a vehicle combination comprising a trailing unit and a preceding unit wherein the trailing unit comprises two or more axles and is coupled to the preceding unit via the coupling, the computer system comprising processing circuitry configured to acquire a current value of a vertical load $F_1$ on the coupling, determine a coupling load capability $F_{1,cap}$ based on the current value of the vertical load $F_1$ on the coupling and a current value of a virtual wheelbase L of the trailing unit, and determine a desired vertical load $F_{1,req}$ on the coupling based on the coupling load capability $F_{1,cap}$.

The first aspect of the disclosure may seek to provide a computer system that enables a vertical load applied to or borne by a coupling between units of a vehicle combination to be controlled. This enables various improvements such as adjusting a load that can be carried by the trailing unit and/or the traction characteristics of the vehicle combination. This can be achieved in a simple manner by controlling loads on the axles of the trailing unit.

Optionally in some examples, including in at least one preferred example, the current value of the vertical load $F_1$ on the coupling is acquired by a first controller associated with the preceding unit and transmitted to a second controller associated with the trailing unit. A technical benefit may include that existing infrastructure of units of a vehicle combination can be utilised to implement improved control of a vertical coupling load.

Optionally in some examples, including in at least one preferred example, the coupling load capability $F_{1,cap}$ is determined by a second controller associated with the trailing unit and transmitted to a first controller associated with the preceding unit. A technical benefit may include that existing infrastructure of units of a vehicle combination can be utilised to implement improved control of a vertical coupling load.

Optionally in some examples, including in at least one preferred example, the processing circuitry is configured to determine the coupling load capability $F_{1,cap}$ by determining a maximum value $L_{max}$ and/or a minimum value $L_{min}$ for the virtual wheelbase L of the trailing unit, and/or determining a maximum value $M_{max}$ and/or a minimum value $M_{min}$ for the payload of the trailing unit. A technical benefit may include that improved control of a vertical coupling load is enabled.

Optionally in some examples, including in at least one preferred example, the coupling load capability $F_{1,cap}$ comprises a maximum coupling load capability $F_{1,cap,max}$ and/or a minimum coupling load capability $F_{1,cap,min}$. A technical benefit may include that improved control of a vertical coupling load is enabled within the physical limits of the vehicle combination.

Optionally in some examples, including in at least one preferred example, the desired vertical load $F_{1,req}$ is determined by a first controller associated with the preceding unit and transmitted to a second controller associated with the trailing unit. A technical benefit may include that existing infrastructure of units of a vehicle combination can be utilised to implement improved control of a vertical coupling load.

Optionally in some examples, including in at least one preferred example, the processing circuitry is configured to determine the desired vertical load $F_{1,req}$ based on a maximum coupling load limit $F_{1,max}$. A technical benefit may include that improved control of a vertical coupling load is enabled within regulatory limits of the vehicle combination.

Optionally in some examples, including in at least one preferred example, the processing circuitry is configured to determine the desired vertical load $F_{1,req}$ based on a desired increase to a load that can be carried by the trailing unit and/or a desired redistribution of traction between the trailing unit and the preceding unit. A technical benefit may include that loading and/or traction conditions of the vehicle combination can be improved via control of a vertical coupling.

Optionally in some examples, including in at least one preferred example, the virtual wheelbase $L$ of the trailing unit is defined between the coupling and a load centre $G$ of the axles of the trailing unit. A technical benefit may include that improved control of a vertical coupling load is enabled.

Optionally in some examples, including in at least one preferred example, the processing circuitry is further configured to provide the desired vertical load $F_{1,req}$ by adjusting the load on at least one axle of the trailing unit such that the longitudinal position of the load centre $G$ of the axles of the trailing unit is translated. A technical benefit may include that improved control of a vertical coupling load is enabled in a simple manner using existing infrastructure of the vehicle combination.

Optionally in some examples, including in at least one preferred example, the processing circuitry is configured to adjust the load on at least one axle of the trailing unit by adjusting a suspension parameter associated with the axle. A technical benefit may include that improved control of a vertical coupling load is enabled in a simple manner using existing infrastructure of the vehicle combination.

According to a second aspect of the disclosure, there is provided a vehicle comprising the computer system of any preceding example. The second aspect of the disclosure may seek to provide a vehicle capable of controlling a vertical load applied to or borne by a coupling between units of the vehicle. This can be achieved in a simple manner by controlling loads on the axles of a trailing unit.

According to a third aspect of the disclosure, there is provided a computer-implemented method for controlling a vertical load on a coupling between units of a vehicle combination comprising a trailing unit and a preceding unit, wherein the trailing unit comprises two or more axles and is coupled to the preceding unit via the coupling, the method comprising acquiring, by processing circuitry of a computer system, a current value of a vertical load $F_1$ on the coupling, determining, by the processing circuitry, a coupling load capability based on the current value of the vertical load $F_1$ on the coupling and a current value of a virtual wheelbase $L$ of the trailing unit, and determining, by the processing circuitry, a desired vertical load on the coupling based on the coupling load capability.

The third aspect of the disclosure may seek to provide a computer-implemented method that enables a vertical load applied to or borne by a coupling between units of a vehicle combination to be controlled. This enables various improvements such as adjusting a load that can be carried by the trailing unit and/or the traction characteristics of the vehicle combination. This can be achieved in a simple manner by controlling loads on the axles of the trailing unit.

According to a fourth aspect of the disclosure, there is provided a computer program product comprising program code for performing, when executed by processing circuitry, the computer-implemented method. The fourth aspect of the disclosure may seek to enable new vehicles and/or legacy vehicles to be conveniently configured, by software installation/update, to enable a vertical load applied to or borne by a coupling between units of a vehicle combination to be controlled. This can be achieved in a simple manner by controlling loads on the axles of the trailing unit.

According to a fifth aspect of the disclosure, there is provided a non-transitory computer-readable storage medium comprising instructions, which when executed by processing circuitry, cause the processing circuitry to perform the computer-implemented method. The fifth aspect of the disclosure may seek to enable new vehicles and/or legacy vehicles to be conveniently configured, by software installation/update, to enable a vertical load applied to or borne by a coupling between units of a vehicle combination to be controlled. This can be achieved in a simple manner by controlling loads on the axles of the trailing unit.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

**BRIEF DESCRIPTION OF THE DRAWINGS**

Examples are described in more detail below with reference to the appended drawings.

**FIG. 1A** schematically shows a side view of a vehicle combination according to an example of the disclosure.
**FIG. 1B** schematically shows a top view of a vehicle combination according to an example of the disclosure.
**FIG. 2A** schematically shows a side view of a vehicle combination according to another example of the disclosure.
**FIG. 2B** illustrates parameters of a trailing unit that may enable determination of a maximum payload of the trailing unit according to an example of the disclosure.
**FIG. 3** is a flow chart of a computer-implemented method according to an example of the disclosure.
**FIG. 4** is a schematic diagram of a computer system for implementing examples disclosed herein.

Like reference numerals refer to like elements throughout the description.

**DETAILED DESCRIPTION**

The detailed description set forth below provides information and examples of the disclosed technology with sufficient detail to enable those skilled in the art to practice the disclosure.

Various regulations exist governing the maximum allowable load for axles of a tractor or a trailer. Other regulations may exist, but they tend to include a maximum load per axle, as this may be a relevant factor for the safety of the vehicle and the longevity of road surfaces. This limits the amount of load that can be carried by a trailer, therefore limiting operational efficiency. Furthermore, axle loads can have an impact on traction of the vehicle combination.

To remedy this, systems, methods, and other approaches are provided for controlling a vertical load on a coupling between units of a vehicle combination. A trailing unit of a vehicle combination having two or more axles is coupled to a preceding unit, for example a tractor, via a coupling known as the kingpin or fifth wheel. A virtual wheelbase of the trailing unit can be defined between the coupling and a load centre of the axles of the trailing unit. By adjusting the respective loads on the axles of the trailing unit, the length of the virtual wheelbase and the load on the coupling point (the "kingpin load") can be adjusted. This can be used to adjust a load that can be carried by the trailing unit and/or the traction characteristics of the vehicle combination.

In particular, a current value of a vertical load on the coupling is acquired, for example by a first controller associated with the preceding unit. Based on the current value of the vertical load on the coupling and a current value of the virtual wheelbase of the trailing unit, a maximum and/or minimum load capability for the coupling can be determined, for example by a second controller associated with the trailing unit. The maximum and/or minimum coupling load capability may be calculated based on possible load redistribution of the axles of the trailing unit. Based on the maximum and/or minimum coupling load capability, a desired vertical load on the coupling can be determined, for example by the first controller. The desired vertical load can then be set based on a desired outcome, for example an increase to the load that can be carried by the trailing unit, or a redistribution of traction between the units.

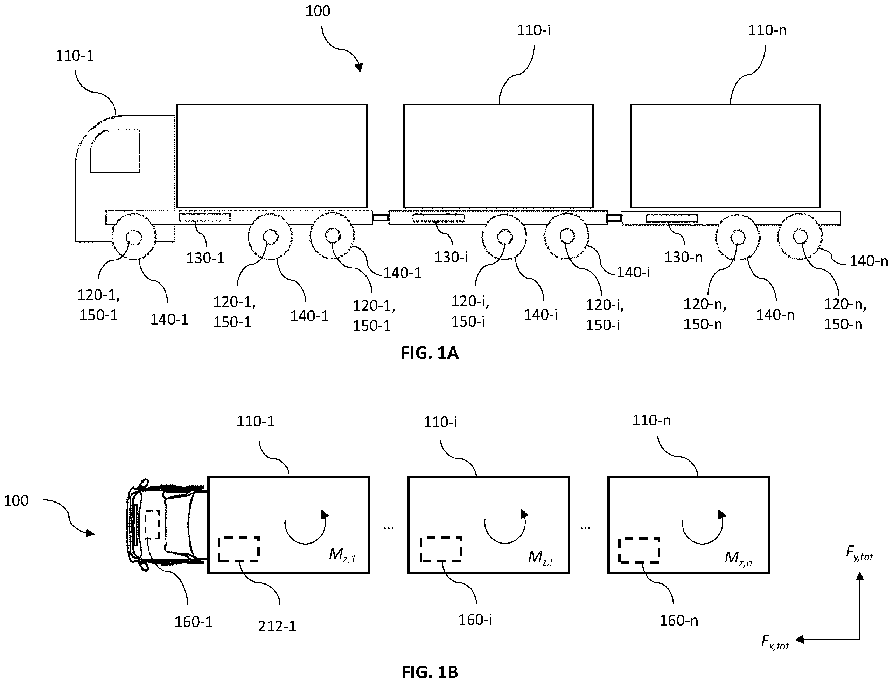

**FIG. 1A** schematically shows a side view of an example vehicle combination **100** of the type considered in this disclosure. The vehicle combination **100** comprises a number of units **110,** including a tractor unit and at least one trailing unit. Each unit **110** may be given an index *i*, and the total number of units **110** in a vehicle combination **100** is designated *n.* Whilst two trailing units are shown, it will be appreciated that the vehicle combination **100** may comprise more or fewer trailing units connected to each other. This gives rise to different types and designations of vehicle combinations.

A tractor unit, such as the tractor unit **110-1,** is generally the foremost unit in a vehicle combination **100,** and may comprise the cabin for the driver, including steering controls, dashboard displays and the like. Generally, the tractor unit **110-1** is used to provide propulsion power for the vehicle combination **100.** In the example of **FIG. 1A,** the tractor unit **110-1** may also be used to store goods that are being transported by the vehicle combination **100.**

A trailing unit, such as the trailing units **110-i, 110-n,** is generally used to store goods that are being transported by the vehicle combination **100.** A trailing unit may be a truck, trailer, dolly and the like. A trailing unit may also provide propulsion to the vehicle combination **100.** A trailing unit without a front axle, such as the trailing units **110-i, 110-n,** is known as a semi-trailer. In vehicle combinations such as that shown in **FIG. 1A,** vehicle motion management is available on a unit level to receive requests from a manual or virtual driver to coordinate the propulsion, braking and steering.

An axle is a set of wheels (one or more pairs) comprising rims and tyres aligned at a longitudinal location. Whilst three tractor axles and two axles per trailer are shown, it will be appreciated that any suitable number of axles may be provide on the respective units **110.** It will also be appreciated that any number of the tractor axles and/or trailer axles may be driven axles, including zero (i.e. one of the units may include at least one driven axle while the other does not).

The vehicle combination **100** may comprise one or more sources or propulsion. For example, on or more of the units **110** may comprise one or more electrical machines **120** such as electric motors. Each unit **110** may comprise one or more batteries **130** configured to provide power to the electrical machines **120.** A vehicle combination **100** that uses only battery power is a BEV. In some examples, for example in the case of an HEV, a unit **110,** most often a tractor unit **110-1,** may also include another source of propulsion, for example an internal combustion engine (ICE). The vehicle combination **100** also comprises a drivetrain (not shown) to deliver mechanical power from the propulsion source (the electrical machines **120** or the ICE) to the wheels **140**. All units **110** may provide propulsion to the vehicle combination **100**. In the examples discussed herein, the vehicle combination **100** may be a BEV or an HEV.

The electrical machines **120** are configured to drive, e.g. provide torque and/or steering to, one or more axles or individual wheels **140** of the unit **110**. The electrical machines **120** of a unit **110** can supply either a positive (propulsion) or negative (braking) force. In some examples, electric motors may also be operated as generators, in order for the electric motors to generate braking force when required. The use of electrical machines **120** to supply a negative force is known as regenerative braking. The energy recovered from regenerative braking can be stored in the batteries **130,** and so regenerative braking is generally preferred over using service brakes **150.**

Furthermore, each unit **110** may comprise one or more sets of service brakes **150**. The service brakes **150** of a unit **110** can supply a negative (braking) force. The service brakes **150** may be, for example, frictional brakes such as pneumatic brakes. Pneumatic brakes use a compressor to fill the brake with air, which may be powered by the batteries **130.** In some examples, the brakes may be electro-mechanical brakes or hydraulic brakes.

The vehicle combination **100** may also comprise one or more auxiliary systems (not shown). The auxiliary systems may include auxiliary mechanical systems, such as alternators, power take-off (PTO) systems, and an air compressors, and auxiliary electrical systems, such as steering pumps, headlights, other light systems, ignition systems, audio systems, and air conditioning systems.

The ICE, electrical machines **120** and service brakes **150** are considered as actuators of the vehicle combination **100**. Other actuators may also be present. For example, steering actuators **150,** such as steering servo arrangements, may be provided, and may be implemented as electro-hydraulic actuators. Each actuator in a given unit **110** may be given an index k, and the total number of actuators in a given unit **110** is designated $m$. It will be appreciated that each axle and/or wheel **140** may have an associated electrical machine **130,** set of service brakes **150,** and/or set of steering actuators.

The vehicle combination **100,** or indeed one or more (e.g. each) units **110,** can be considered to comprise two systems: a propulsion system comprising the components that are involved in propulsion of the vehicle combination **100,** and a braking system comprising the components that are involved in braking of the vehicle combination **100**. As such, the propulsion system can be considered to comprise one or more of the ICE, electrical machines **120,** the drivetrain, and batteries **130** of the vehicle combination **100,** while the braking system can be considered to comprise the ICE, the electrical machines **120,** the drivetrain, the batteries **130,** and the service brakes **150.** As such, there is some overlap between the propulsion system and the braking system.

**FIG. 1B** schematically shows a top view of an example vehicle combination **100** of the type considered in this disclosure. Similarly to the example of **FIG. 1A,** the vehicle combination **100** comprises a number of units **110,** including a tractor unit and a plurality of trailing units. **FIG. 1B** also shows the requested global forces of the vehicle combination **100** as a whole. Examples of requested global forces of the vehicle combination **100** as a whole may e.g. include a total longitudinal/axial force $F_{x.tot}$ a total lateral/radial force $F_{y,tot},$ and/or one or more yaw moments $M_{z,i}$ for the respective vehicle units **110**. In order to control motion of a vehicle combination **100,** the requested global forces of the vehicle combination **100** must be determined and resolved. This may be achieved by a control system of the vehicle combination **100** that determines control signals based on a requested reference input and certain operating conditions of the vehicle combination **100**.

As shown in the example of **FIG. 1B,** each unit **110** of the vehicle combination **100** has a respective controller **160.** The tractor unit controller **160-1** may include an implementation of a combination control allocator, while each controller **160** may include an implementation of a respective unit control allocator. The controller **160** (including the combination control allocator and the various unit specific control allocators) together form a distributed control allocation system for the vehicle combination **100.** In this system, the control allocation may be performed on multiple levels, i.e. first on a level of the vehicle combination **100** as a whole, and then on a level of each vehicle unit **110** individually. It will be appreciated that the combination control allocator may be provided as part of any unit **110** of the vehicle combination **100**.

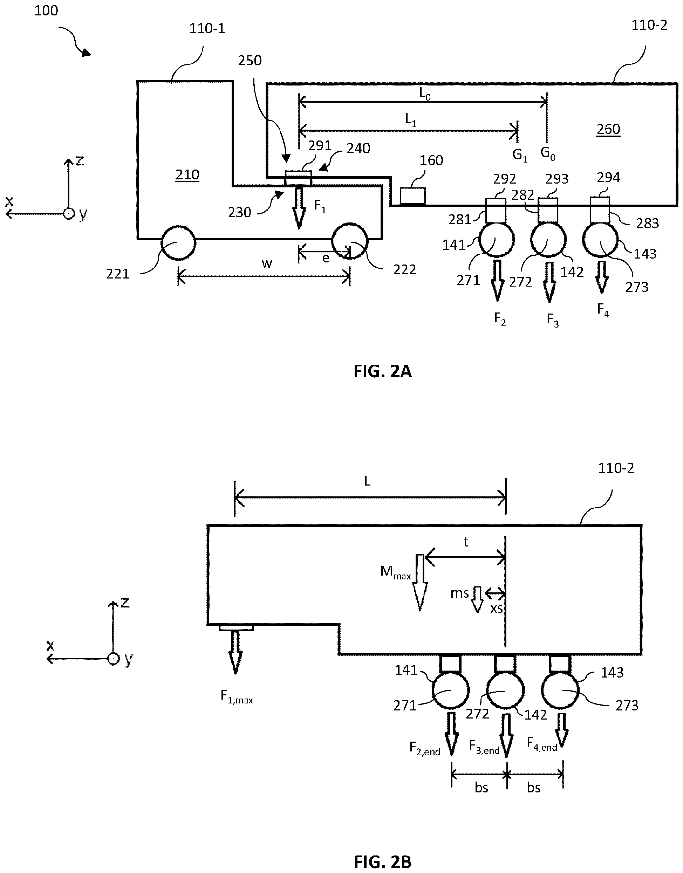

**FIG. 2A** schematically shows a side view of another example vehicle combination **100** of the type considered in this disclosure. The vehicle combination **100** comprises a tractor unit **110-1** and a trailing unit **110-2**. The direction x is a longitudinal direction, the direction y is a transversal direction, and the direction z is a vertical direction.

The tractor unit **110-1** is shown as having a chassis **210** supported by a number of axles **220,** in this example two axles **221, 222**. In this example, at least one of the axles **221, 222** is a driven axle. The distance between the two axles **221, 222** of the tractor unit **110-1** is known as the wheelbase w of tractor unit **110-1**. The loads applied to or borne by the respective axles **221, 222** of the tractor unit **110-1** are denoted $F_{21}$ and $F_{22}.$

The tractor unit **110-1** also comprises a fifth wheel **230** intended to support and connect to the trailing unit **110-2**. The fifth wheel **230** is located at a distance e from the rearmost axle **222** of the tractor unit **110-1**.

The trailing unit **110-2** may be removably connected to the tractor unit **110-1**. To that end, the trailing unit **110-2** comprises a kingpin **240** connectable to the fifth wheel **230** to form a coupling **250** between the tractor unit **110-1** and the trailing unit **110-2.** The trailing unit **110-2** further comprises a chassis **260** intended to receive goods to be transported. The load applied to or borne by the coupling **250** (e.g. the fifth wheel **230** and/or the kingpin **240**) is denoted $F_1$.

The chassis **260** of the trailing unit **110-2** is supported by a number of axles **270,** in particular at least two axles. In this example, the at least two axles comprise a foremost axle **271,** an intermediate axle **272,** and a rearmost axle **273.** Each axle comprises a respective set of wheels **141, 142, 143.** The loads applied to or borne by the respective axles **271, 272, 273** of the trailing unit **110-2** are denoted $F_2$, $F_3$, and $F_4$.

The axles **270** are connected to the chassis **260** of the trailing unit **110-2** by means of suspension systems **280,** in particular respective suspension systems **281, 282, 283.** The suspension systems **281, 282, 283** are adjustable independently, i.e., the spring rate, damping, and/or suspension travel may be set differently and/or may be dynamically and independently controlled. The parameter of the suspension systems **280** that can be adjusted may be a suspension stiffness, denoted $k_1$, $k_2$, $k_3$ respectively. In some examples, the suspension is hydraulic or electro-mechanical. In some examples, the suspension contains an air bag, the pressure of which can be independently selected for each of the suspension systems **280** (in such a case, the regulated parameter is a pressure, denoted $p_1$, $p_2$, $p_3$). A relationship exists between $p_i$ and k:

$$p_i = Dk_i \frac{H}{2A} \qquad (1)$$

where $p_i$ is the pressure of the airbag of axle $i$, $k_i$ is the stiffness of the suspension $i$, $D$ is a geometrical constant, $H$ is height of the airbag, and $A$ is the area of the airbag.

When suspensions comprise air bags as noted above, $F = p * A$, where F is the load, $p$ the pressure and $A$ the area of the air bag. As the pressure is changed in the air bag, there is a conservation of the quantity $pV/m$ as follows:

$$p_a * \frac{V_a}{m_a} = p_b * \frac{V_b}{m_b}, \qquad (2)$$

where $a$ and $b$ refer to two distinct loads on the same axis (e.g. before and after a transfer of load by action on the suspension parameters), $p_a$ and $p_b$ are the pressures in the bellows for these two loads, $V_a$ and $V_b$ are the volumes of air in the bellows, and $m_a$ and $m_b$ are the masses of air in the bellows.

Since the area $A$ is not affected by either load or pressure, it follows that:

$$\frac{F_a * h_a}{m_a} = \frac{F_b * h_b}{m_b} \qquad (3)$$

where $F_a$ and $F_b$ are the loads before and after a changed of load; $h_a$ and $h_b$ are the heights of the air bags, and $m_a$ and $m_b$ are the masses of air in the bellows.

Equation (3) indicates that when the load is changed on an axle, if it is not accompanied by a change of mass of air, the height of the bellow will change (in inverse proportion to the change of load). This may affect the level and/or orientation of the trailer. A small change of level or orientation of the trailer may be acceptable. It may be advantageous, however, to act on the air mass in the airbag to compensate for the change of height of the bellow. For example, if it is desired for $h_a$ and $h_b$ to be equal when the load increases on an axle ($F_b > F_a$), it is needed to increase the mass of air in the corresponding bellow with the same proportion ($m_b > m_a$).

The trailing unit **110-2** may contain load measurement devices **290** (e.g., embedded load cells or external weighing mechanism lying on the floor of the loading dock), in particular a load measurement device **291** for the kingpin **240** and respective load measurement devices **294, 293, 294** for each axle **271, 272, 273.** The load measurement devices **290** may be connected to a control unit which may be configured to receive signals from the load measurement devices **290** and which may control the suspension settings of the suspension systems **280** of the trailing unit **110-2.** The control unit may be a controller **160-1** of the tractor unit **110-1,** a controller **160-2** of the trailing unit **110-2,** or may be a remote controller which is wirelessly connected to the load measurement devices **290.**

A virtual wheelbase of the trailing unit **110-2** may be defined as the distance from the coupling **250** to a load centre G of the axles **270** of the trailing unit **110-2.** The load centre may be defined as the average location of the load across the axles **270.** It is the position at which the total load across the axles **270** may be considered to apply. In a default configuration, the settings of all the axles **271, 272, 273** are the same, meaning the load is evenly spread between the axles **271, 272, 273** and the load centre, in this instance denoted $G_0$, is located at about the same position as the intermediate axle **272.** The virtual wheelbase of the trailing unit **110-2** in this instance is denoted $L_0$.

Legal regulations or technical constraints may limit the load per axle and may prescribe $F_{2,max}$, $F_{3,max}$, and/or

$F_{4,max}$, for example as being 10 tons, or 11.5 tons when the respective axle **271, 272, 273** is a driven axle. Similarly, regulations or technical constraints may limit the load per axle of the tractor unit **110-1** $F_{21,max}$, $F_{22,max}$, for example to 10 tons.

Similarly, regulations or technical constraints may limit the load on the coupling **250** (e.g. the fifth wheel **230** and/or the kingpin **240)** $F_{1,max}$. In some examples, $F_{1,max}$ may be stored in a controller **160** of the vehicle combination **100.** In some examples, the controller **160** may integrate with or be connected to a GPS system (e.g., an on-board GPS of the tractor unit **110-1)** and may adjust a regulatory value of $F_{1,max}$ based on the actual location of the vehicle combination **100.** For instance, if the vehicle combination **100** enters a geographic area that allows more load the coupling **250** or axles **220, 270,** the stored limit may be updated.

Alternatively, the limit $F_{1,max}$ may be determined based on regulations or constraints on the axles **221, 222** of the tractor unit **110-1** as follows:

$$F_{1,max} = Min \left\{ (GVW - F_o - R_o); \left(F_{21,max} - F_0\right) * \frac{w}{e}; \left(F_{22,max} - R_o\right) \right. $$
$$\left. * \frac{w}{w-e} \right\} \tag{4}$$

where *GVW* is the gross weight of the tractor unit **110-1,** $F_0$ is the unladen load on the front axle **221** of the tractor unit **110-1,** and $R_0$ is the unladen load on the rear axle **222** of the tractor unit **110-1.**

The load $F_1$ applied to or borne by the coupling **250** can therefore be related to the virtual wheelbase *L* of the trailing unit 110-2 as follows:

$$F_1 = mg \left( 1 - \frac{L - t}{L} \right) \tag{5}$$

where *mg* is the gross weight of the trailing unit **110-2,** *L* is the virtual wheelbase of the trailing unit **110-2,** and *t* is the distance between the load centre G of the axles **271, 272, 273** and the centre of mass of the fully laden trailing unit **110-2.**

**FIG. 2B** illustrates parameters of the trailing unit **110-2** that may enable determination of the maximum payload $M_{max}$ of the trailing unit **110-2** for a given geometry of trailing unit **110-2** (a trailing unit load capability). By simplification, this figure shows axles **271, 272, 273** being equidistant at a distance bs. The maximum load $M_{max}$ that can be loaded on the trailing unit **110-2** can be determined as the minimum of:

$$(GCW - F_0 - R_o - ms) \tag{6}$$

$$\frac{1}{t+bs} * \left( bs * \left( 2 * F_{2,end} + F_{3,end} \right) - ms * (xs + bs) \right) + F_{1,max} * (L + bs) \tag{7}$$

where *GCW* is the gross weight of the vehicle combination **100,** *ms* is the unladen mass of the trailing unit **110-2,** *xs* is the distance between the load centre G of the axles **271, 272, 273** and the centre of mass of the unladen trailing unit **110-2,** and $F_{2,end}$ and $F_{3,end}$ are the loads on the axles **271, 272** (e.g., a predetermined value of 9 or 10 tons) when the trailing unit **110-2** is fully laden.

The load $F_{4,end}$ on the rearmost axle **273** when the trailing unit **110-2** is fully laden can then be determined as:

$$F_{4,end} = M_{max} + ms - F_{1,max} - F_{2,end} - F_{3,end} \tag{8}$$

Based on the concepts described above, the load $F_1$ applied to or borne by the coupling **250** (e.g. the fifth wheel **230** and/or the kingpin **240),** and therefore the maximum payload $M_{max}$ of the trailing unit **110-2,** can be controlled by adjusting the virtual wheelbase of the trailing unit **110-2.** This can be achieved by moving the load centre G of the axles **270** via control of the loads on the individual axles **271, 272, 273** of the trailing unit **110-2.** As explained in European patent application no. 23210070.1 filed on 15 November 2023 in the name of Volvo Truck Corporation, the position of the load centre of the axles **270** may be adjusted, for example by adjusting the settings of the suspension **283** of the rearmost axle **273.** For example, the air pressure in the suspension **283** may be reduced to relieve the rear axle **273** from part of its load $F_4$. **FIG. 2A** shows this configuration where the load $F_4$ is smaller than the loads $F_2$ and/or $F_3$. Relieving the load from the rearmost axle **273** moves the load centre of the axles **270** forward to a position $G_1$, as the foremost **271** and optional intermediate axle **272** bear more weight than the rearmost axle **273.** As the load centre of the axles **270** is moved forward, the virtual wheelbase of the trailing unit **110-2** is shortened to $L_1$ (which is less than $L_0$). Whilst explained in relation to a tractor unit **110-1** and a trailing unit **110-2,** it will be appreciated that similar concepts may be applied to consecutive trailing units connected via a coupling.

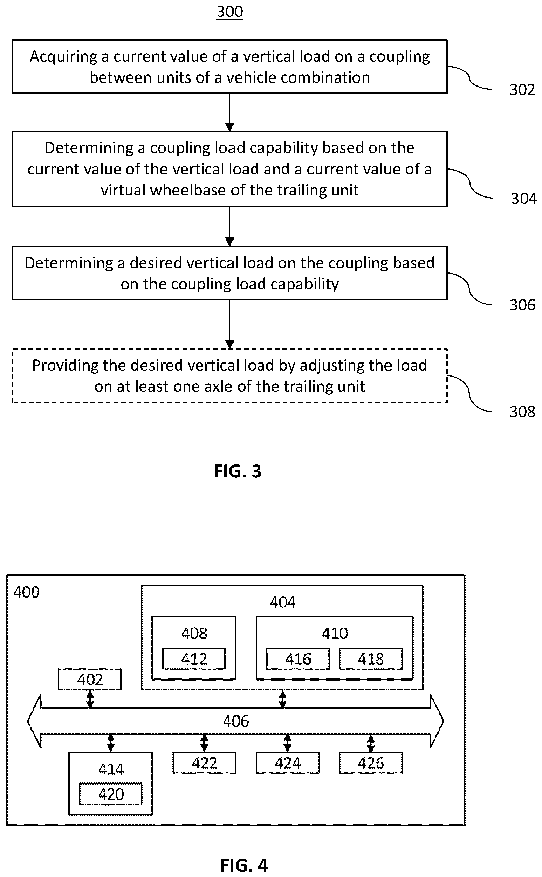

FIG. 3 is a flow chart of a computer-implemented method **300** according to an example. The method **300** is for controlling a vertical load on a coupling between units of a vehicle combination, such as the vehicle combination **100.** The method **300** enables a load $F_1$ applied to or borne by the coupling, and therefore the maximum payload of a trailing unit, to be controlled. The method **300** may be implemented by processing circuitry of a computer system (e.g., any combination of the controllers **160).**

At **302,** a current value of a vertical load on a coupling between a preceding unit and a trailing unit is acquired. For example, a measured value of the load $F_1$ is provided from a sensor associated with the coupling **250.** This may be a sensor and/or value associated with the fifth wheel **230** and/or the kingpin **240.** In one particular example, the current value of a vertical load may be acquired by a first controller associated with a preceding unit and transmitted to a second controller associated with the trailing unit. For example, the controller **160-1** of the tractor unit **110-1** may acquire and transmit the value of a so-called "kingpin load" to the controller **160-2** of the trailing unit **110-2.**

At **304,** a coupling load capability $F_{1,cap}$ is determined based on the current value of the vertical load on the coupling and a current value of a virtual wheelbase of the trailing unit. The coupling load capability may comprise a maximum coupling load capability $F_{1,cap,max}$ and/or a minimum coupling load capability $F_{1,cap,min}$ for the coupling. The maximum coupling load capability $F_{1,cap,max}$ is the highest load that can physically be applied to the coupling **250,** and may be a load applied to maximize traction on the tractor unit **110-1,** or provide a smaller turning radius with a shorter virtual wheelbase. The minimum coupling load capability $F_{1,cap,min}$ is the lowest load that should be applied to the coupling **250,** and may be a load applied to maximize a payload of the trailing unit **110-2** or maximize traction on the trailing unit **110-2.** In one particular example, the coupling load capability $F_{1,cap}$ may be determined by the second controller associated with the trailing unit and transmitted to the first controller associated with the preceding unit. For example, the controller **160-2** of the trailing unit **110-2** may determine the coupling load capability $F_{1,cap}$ and transmit it to the controller **160-1** of the tractor unit **110-1.**

As discussed above, a value of the coupling load $F_1$ can be dependent on the virtual wheelbase $L$ of the trailing unit, which is in turn dependent on the position of the load centre $G$ of the axles **270** of the trailing unit **110-2.** The position of the load centre $G$ of the axles **270** of the trailing unit **110-2** is dependent on the individual axle loads $F_2, F_3, F_4$. The coupling load capability $F_{1,cap}$ can therefore be determined in the same manner. For example, based on the load limits per axle, e.g. $F_{2,max}, F_{3,max},$ and/or $F_{4,max},$ a maximum (rearmost) longitudinal position $G_{max}$ and/or minimum (foremost) longitudinal position $G_{min}$ of the load centre $G$ of the axles **270** can be determined. This leads to a corresponding maximum value $L_{max}$ and/or minimum value $L_{min}$ for the virtual wheelbase $L$ of the trailing unit **110-2.** This in turn leads to a maximum value $F_{1,cap,max}$ and/or minimum for the coupling load $F_{1,cap,min},$ i.e. the coupling load capability $F_{1,cap}$. This may also correspond to a maximum value $M_{max}$ and/or minimum value $M_{min}$ for the payload of the trailing unit **110-2.**

At **306,** a desired vertical load $F_{1,req}$ on the coupling **250** is determined based on the coupling load capability $F_{1,cap}$. In one particular example, the desired vertical load $F_{1,req}$ may be determined by the first controller associated with the preceding unit and transmitted to the second controller associated with the trailing unit. For example, the controller **160-1** of the tractor unit **110-1** may determine and transmit the desired vertical load $F_{1,req}$ to the controller 160-2 of the trailing unit **110-2.**

The coupling load capability $F_{1,cap}$ may define maximum and minimum achievable limits for the vertical load $F_1$ on the coupling. Regulations or technical constraints may also limit the load on the coupling to $F_{1,max},$ as discussed above. Based on these values and a desired outcome, the desired vertical load $F_{1,req}$ on the coupling can be determined. For example, if it is determined that the current value $F_1$ of the vertical load on the coupling **250** is above a lower coupling load capability $F_{1,cap,min},$ the maximum payload of the trailing unit **110-2** can be increased by providing a desired vertical load $F_{1,req}$ that is lower than the current value $F_1$ of the vertical load. A similar approach may apply when it is desired to decrease the traction on the preceding unit **110-1** and/or increase the traction on the trailing unit **110-2.** On the other hand, if it is desired to increase the traction on the preceding unit **110-1** and/or decrease the traction on the trailing unit **110-2,** and the current value $F_1$ of the vertical load on the coupling **250** is below an upper coupling load capability $F_{1,cap,max}$ (and $F_{1,max}$), a desired vertical load $F_{1,req}$ can be provided that is higher than the current value $F_1$ of the vertical load.

At **308,** the desired vertical load $F_{1,req}$ may be implemented by adjusting the load on at least one axle **270** of the trailing unit **110-2.** As discussed above, adjustment of the load on at least one axle **270** of the trailing unit **110-2** will cause a longitudinal translation of the load centre $G$ of the axles **270.** This will in turn cause an adjustment to the virtual wheelbase $L$ of the trailing unit **110-2,** which will lead to a change in the vertical load $F_1$ on the coupling **250.** As discussed above, adjustment of the load on an axle **270** of the trailing unit **110-2** may be achieved by adjusting a suspension parameter associated with the axle **270.** It will be appreciated that any axles that are lifted (i.e. not in contact with the ground) do not contribute to the position of the load centre of the axles. Therefore, if it is desired that such an axle is to contribute to the position of the load centre (e.g. during an adjustment of the load centre), it should be necessary to firstly lower this axle before any displacement or load adjustment is made.

In an example where it is desired to decrease the vertical load $F_1$ on the coupling **250,** for example to increase the maximum payload of the trailing unit **110-2** or increase the traction on the trailing unit **110-2,** the longitudinal position of the load centre $G$ of the axles **270** should be moved forward to shorten the virtual $L$ wheelbase of the trailing unit **110-2.** This can be achieved, for example, by reducing the load on the rearmost axle **273** of the trailing unit **110-2.** For example, suspension stiffness and/or the air pressure in the suspension **283** of the rearmost axle **273** may be reduced to relieve the rear axle **273** from part of its load $F_4$. Similarly, the load on an intermediate axle **272** may be adjusted appropriately. The adjustments can be made in an incremental manner to ensure the relevant capabilities and limits are not exceeded.

In an example where it is desired to increase the vertical load $F_1$ on the coupling 250, for example to increase the traction on the tractor unit **110-1,** the longitudinal position of the load centre $G$ of the axles **270** may be moved backward to lengthen the virtual wheelbase $L$ of the trailing unit. This can be achieved, for example, by increasing the load on the rearmost axle **273** of the trailing unit **110-2** (or indeed reducing the load on the foremost axle **271** of the trailing unit **110-2).** For example, the suspension stiffness and/or air pressure in the suspension **283** of the rearmost axle **273** may be increased, and/or the air pressure in the suspension **281** of the foremost axle **271** may be increased. Similarly, the load on an intermediate axle **272** may be adjusted appropriately. The adjustments can be made in an incremental manner to ensure the relevant capabilities and limits are not exceeded.

The suspension settings may be automatically modified while driving or to enable a manual operator to further modify the suspension settings while driving. This is done while ensuring that the vertical load on the coupling remains equal to or less than the threshold load $F_{1,max}$. Also, it may be ensured that other technical or legal constraints are respected. This may be helpful to improve traction when the vehicle combination moves uphill and/or under deteriorated conditions (snow, sand, etc.). For instance, the vertical load on the coupling can be lowered as much as possible when travelling on snow or ice to maximise traction. In some examples, the suspension settings may be automatically modified while driving for improving the agility of the trailer. In some examples, the increase of load on driven axles may be made conditionally to the vehicle combination moving below a given speed. For instance, in some countries, the axles can bear 30% more load below 30 kph than at higher speed. Under these circumstances, a new value for $F_{1,max}$ can be acquired and a new value for the suspension settings may be set accordingly.

The method **300** enables a vertical load on a coupling between units of a vehicle combination to be controlled. This can be achieved by a distributed control system for the vehicle combination. This enables various improvements such as adjusting a load that can be carried by the trailing unit and/or the traction characteristics of the vehicle combination. This can be achieved in a simple manner by controlling loads on the axles of the trailing unit.

**FIG. 4** is a schematic diagram of a computer system **400** for implementing examples disclosed herein. The computer system **400** is adapted to execute instructions from a computer-readable medium to perform these and/or any of the functions or processing described herein. The computer system **400** may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system **400** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **400** may comprise at least one computing device or electronic device capable of including firmware, hardware, and/or executing software instructions to implement the functionality described herein. The computer system **400** may include processing circuitry **402** (e.g., processing circuitry including one or more processor devices or control units), a memory **404,** and a system bus **406.** The computer system **400** may include at least one computing device having the processing circuitry **402.** The system bus **406** provides an interface for system components including, but not limited to, the memory **404** and the processing circuitry **402.** The processing circuitry **402** may include any number of hardware components for conducting data or signal processing or for executing computer code stored in memory **404.** The processing circuitry **402** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **402** may further include computer executable code that controls operation of the programmable device.

The system bus **406** may be any of several types of bus structures that may further interconnect to a memory bus (with or without a memory controller), a peripheral bus, and/or a local bus using any of a variety of bus architectures. The memory **404** may be one or more devices for storing data and/or computer code for completing or facilitating methods described herein. The memory **404** may include database components, object code components, script components, or other types of information structure for supporting the various activities herein. Any distributed or local memory device may be utilized with the systems and methods of this description. The memory **404** may be communicably connected to the processing circuitry **402** (e.g., via a circuit or any other wired, wireless, or network connection) and may include computer code for executing one or more processes described herein. The memory **404** may include non-volatile memory **408** (e.g., read-only memory (ROM), erasable programmable read-only memory (EPROM), electrically erasable programmable read-only memory (EEPROM), etc.), and volatile memory **410** (e.g., random-access memory (RAM)), or any other medium which can be used to carry or store desired program code in the form of machine-executable instructions or data structures and which can be accessed by a computer or other machine with processing circuitry **402**. A basic input/output system (BIOS) **412** may be stored in the non-volatile memory **408** and can include the basic routines that help to transfer information between elements within the computer system **400.**

The computer system **400** may further include or be coupled to a non-transitory computer-readable storage medium such as the storage device **414,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **414** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **414** and/or in the volatile memory **410,** which may include an operating system **416** and/or one or more program modules **418**. All or a portion of the examples disclosed herein may be implemented as a computer program **420** stored on a transitory or non-transitory computer-usable or computer-readable storage medium (e.g., single medium or multiple media), such as the storage device **414,** which includes complex programming instructions (e.g., complex computer-readable program code) to cause the processing circuitry **402** to carry out actions described herein. Thus, the computer-readable program code of the computer program **420** can comprise software instructions for implementing the functionality of the examples described herein when executed by the processing circuitry **402**. In some examples, the storage device **414** may be a computer program product (e.g., readable storage medium) storing the computer program **420** thereon, where at least a portion of a computer program **420** may be loadable (e.g., into a processor) for implementing the functionality of the examples described herein when executed by the processing circuitry **402**. The processing circuitry **402** may serve as a controller or control system for the computer system **400** that is to implement the functionality described herein.

The computer system **400** may include an input device interface **422** configured to receive input and selections to be communicated to the computer system **400** when executing instructions, such as from a keyboard, mouse, touch-sensitive surface, etc. Such input devices may be connected to the processing circuitry **402** through the input device interface **422** coupled to the system bus **406** but can be connected through other interfaces, such as a parallel port, an Institute of Electrical and Electronic Engineers (IEEE) 1394 serial port, a Universal Serial Bus (USB) port, an IR interface, and the like. The computer system **400** may include an output device interface **424** configured to forward output, such as to a display, a video display unit (e.g., a liquid crystal display (LCD) or a cathode ray tube (CRT)). The computer system **400** may include a communications interface **426** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

According to certain examples, there is also disclosed:

Example 1: A computer system (160, 400) for controlling a vertical load on a coupling (230, 240, 250) between units (110) of a vehicle combination (100) comprising a trailing unit (110-2) and a preceding unit (110-1), wherein the trailing unit (110-2) comprises two or more axles (270) and is coupled to the preceding unit (110-1) via the coupling (230, 240, 250), the computer system (160, 400) comprising processing circuitry (402) configured to: acquire a current value of a vertical load $F_1$ on the coupling (230, 240, 250); determine a coupling load capability $F_{1,cap}$ based on the current value of the vertical load $F_1$ on the coupling (230, 240, 250) and a current value of a virtual wheelbase L of the trailing unit (110-2); and determine a desired vertical load $F_{1,req}$ on the coupling (230, 240, 250) based on the coupling load capability $F_{1,cap}$.

Example 2: The computer system (160, 400) of example 1, wherein the current value of the vertical load $F_1$ on the coupling (230, 240, 250) is acquired by a first controller (160-1) associated with the preceding unit (110-1) and transmitted to a second controller (160-2) associated with the trailing unit (110-2).

Example 3: The computer system (160, 400) of example 1 or 2, wherein the coupling load capability $F_{1,cap}$ is determined by a second controller (160-2) associated with the trailing unit (110-2) and transmitted to a first controller (160-1) associated with the preceding unit (110-1).

Example 4: The computer system (160, 400) of any preceding example, wherein the processing circuitry (402) is configured to determine the coupling load capability $F_{1,cap}$ by determining a maximum value $L_{max}$ and/or a minimum value $L_{min}$ for the virtual wheelbase $L$ of the trailing unit (110-2), and/or determining a maximum value $M_{max}$ and/or a minimum value $M_{min}$ for the payload of the trailing unit (110-2).

Example 5: The computer system (160, 400) of any preceding example, wherein the coupling load capability $F_{1,cap}$ comprises a maximum coupling load capability $F_{1,cap,max}$ and/or a minimum coupling load capability $F_{1,cap,min}$.

Example 6: The computer system (160, 400) of any preceding example, wherein the desired vertical load $F_{1,req}$ is determined by a first controller (160-1) associated with the preceding unit (110-1) and transmitted to a second controller (160-2) associated with the trailing unit (110-2).

Example 7: The computer system (160, 400) of any preceding example, wherein the processing circuitry (402) is configured to determine the desired vertical load $F_{1,req}$ based on a maximum coupling load limit $F_{1,max}$.

Example 8: The computer system (160, 400) of any preceding example, wherein the processing circuitry (402) is configured to determine the desired vertical load $F_{1,req}$ based on a desired increase to a load that can be carried by the trailing unit (110-2) and/or a desired redistribution of traction between the trailing unit (110-2) and the preceding unit (110-1).

Example 9: The computer system (160, 400) of any preceding example, wherein the virtual wheelbase $L$ of the trailing unit (110-2) is defined between the coupling (230, 240, 250) and a load centre $G$ of the axles (270) of the trailing unit (110-2).

Example 10: The computer system (160, 400) of any preceding example, wherein the processing circuitry (402) is further configured to provide the desired vertical load $F_{1,req}$ by adjusting the load on at least one axle (270) of the trailing unit (110-2) such that the longitudinal position of the load centre G of the axles (270) of the trailing unit (110-2) is translated.

Example 11: The computer system (160, 400) of example 10, wherein the processing circuitry (402) is configured to adjust the load on at least one axle (270) of the trailing unit (110-2) by adjusting a suspension parameter associated with the axle (270).

Example 12: A vehicle (100) comprising the computer system (160, 400) of any preceding example.

Example 13: A computer-implemented method (300) for controlling a vertical load on a coupling (230, 240, 250) between units (110) of a vehicle combination (100) comprising a trailing unit (110-2) and a preceding unit (110-1), wherein the trailing unit (110-2) comprises two or more axles (270) and is coupled to the preceding unit (110-1) via the coupling (230, 240, 250), the method (300) comprising: acquiring (302), by processing circuitry (402) of a computer system (160, 400), a current value of a vertical load $F_1$ on the coupling (230, 240, 250); determining (304), by the processing circuitry (402), a coupling load capability based on the current value of the vertical load $F_1$ on the coupling (230, 240, 250) and a current value of a virtual wheelbase $L$ of the trailing unit (110-2); and determining (306), by the processing circuitry (402), a desired vertical load on the coupling (230, 240, 250) based on the coupling load capability.

Example 14: The computer-implemented method (300) of example 13, comprising acquiring the current value of the vertical load $F_1$ on the coupling (230, 240, 250) by a first controller (160-1) associated with the preceding unit (110-1) and transmitting the current value of the vertical load $F_1$ on the coupling to a second controller (160-2) associated with the trailing unit (110-2).

Example 15: The computer-implemented method (300) of example 13 or 14, comprising determining the coupling load capability $F_{1,cap}$ by a second controller (160-2) associated with the trailing unit (110-2) and transmitting the coupling load capability $F_{1,cap}$ to a first controller (160-1) associated with the preceding unit (110-1).

Example 16: The computer-implemented method (300) of any of examples 13 to 15, comprising determining the coupling load capability $F_{1,cap}$ by determining a maximum value $L_{max}$ and/or a minimum value $L_{min}$ for the virtual wheelbase $L$ of the trailing unit (110-2), and/or determining a maximum value $M_{max}$ and/or a minimum value $M_{min}$ for the payload of the trailing unit (110-2).

Example 17: The computer-implemented method (300) of any of examples 13 to 16, wherein the coupling load capability $F_{1,cap}$ comprises a maximum coupling load capability $F_{1,cap,max}$ and/or a minimum coupling load capability $F_{l,cap,min}$.

Example 18: The computer-implemented method (300) of any of examples 13 to 17, comprising determining the desired vertical load $F_{1,req}$ by a first controller (160-1) associated with the preceding unit (110-1) and transmitting the desired vertical load $F_{1,req}$ to a second controller (160-2) associated with the trailing unit (110-2).

Example 19: The computer-implemented method (300) of any of examples 13 to 18, comprising determining the desired vertical load $F_{1,req}$ based on a maximum coupling load limit $F_{1,max}$.

Example 20: The computer-implemented method (300) of any of examples 13 to 19, comprising determining the desired vertical load $F_{1,req}$ based on a desired increase to a load that can be carried by the trailing unit (110-2) and/or a desired redistribution of traction between the trailing unit (110-2) and the preceding unit (110-1).

Example 21: The computer-implemented method (300) of any of examples 13 to 20, wherein the virtual wheelbase L of the trailing unit (110-2) is defined between the coupling (230, 240, 250) and a load centre G of the axles (270) of the trailing unit (110-2).

Example 22: The computer-implemented method (300) of any of examples 13 to 21, comprising providing the desired vertical load $F_{1,req}$ by adjusting the load on at least one axle (270) of the trailing unit (110-2) such that the longitudinal position of the load centre G of the axles (270) of the trailing unit (110-2) is translated.

Example 23: The computer-implemented method (300) of example 22, comprising adjusting the load on at least one axle (270) of the trailing unit (110-2) by adjusting a suspension parameter associated with the axle (270).

Example 24: A computer program product comprising program code for performing, when executed by processing circuitry (402), the computer-implemented method (300) of any of examples 13 to 23.

Example 25: A non-transitory computer-readable storage medium comprising instructions, which when executed by processing circuitry (402), cause the processing circuitry to perform the computer-implemented method (300) of any of examples 13 to 23.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1.  A computer system (160, 400) for controlling a vertical load on a coupling (230, 240, 250) between units (110) of a vehicle combination (100) comprising a trailing unit (110-2) and a preceding unit (110-1), wherein the trailing unit (110-2) comprises two or more axles (270) and is coupled to the preceding unit (110-1) via the coupling (230, 240, 250), the computer system (160, 400) comprising processing circuitry (402) configured to:

    acquire a current value of a vertical load $F_1$ on the coupling (230, 240, 250);
    determine a coupling load capability $F_{1,cap}$ based on the current value of the vertical load $F_1$ on the coupling (230, 240, 250) and a current value of a virtual wheelbase L of the trailing unit (110-2); and
    determine a desired vertical load $F_{1,req}$ on the coupling (230, 240, 250) based on the coupling load capability $F_{1,cap}$.

2. The computer system (160, 400) of claim 1, wherein the current value of the vertical load $F_1$ on the coupling (230, 240, 250) is acquired by a first controller (160-1) associated with the preceding unit (110-1) and transmitted to a second controller (160-2) associated with the trailing unit (110-2).

3. The computer system (160, 400) of claim 1 or 2, wherein the coupling load capability $F_{1,cap}$ is determined by a second controller (160-2) associated with the trailing unit (110-2) and transmitted to a first controller (160-1) associated with the preceding unit (110-1).

4. The computer system (160, 400) of any preceding claim, wherein the processing circuitry (402) is configured to determine the coupling load capability $F_{1,cap}$ by determining a maximum value $L_{max}$ and/or a minimum value $L_{min}$ for the virtual wheelbase $L$ of the trailing unit (110-2), and/or determining a maximum value $M_{max}$ and/or a minimum value $M_{min}$ for the payload of the trailing unit (110-2).

5. The computer system (160, 400) of any preceding claim, wherein the coupling load capability $F_{1,cap}$ comprises a maximum coupling load capability $F_{1,cap,max}$ and/or a minimum coupling load capability $F_{1,cap,min}$.

6. The computer system (160, 400) of any preceding claim, wherein the desired vertical load $F_{1,req}$ is determined by a first controller (160-1) associated with the preceding unit (110-1) and transmitted to a second controller (160-2) associated with the trailing unit (110-2).

7. The computer system (160, 400) of any preceding claim, wherein the processing circuitry (402) is configured to determine the desired vertical load $F_{1,req}$ based on a maximum coupling load limit $F_{1,max}$.

8. The computer system (160, 400) of any preceding claim, wherein the processing circuitry (402) is configured to determine the desired vertical load $F_{1,req}$ based on a desired increase to a load that can be carried by the trailing unit (110-2) and/or a desired redistribution of traction between the trailing unit (110-2) and the preceding unit (110-1).

9. The computer system (160, 400) of any preceding claim, wherein the virtual wheelbase $L$ of the trailing unit (110-2) is defined between the coupling (230, 240, 250) and a load centre G of the axles (270) of the trailing unit (110-2).

10. The computer system (160, 400) of any preceding claim, wherein the processing circuitry (402) is further configured to provide the desired vertical load $F_{1,req}$ by adjusting the load on at least one axle (270) of the trailing unit (110-2) such that the longitudinal position of the load centre G of the axles (270) of the trailing unit (110-2) is translated.

11. The computer system (160, 400) of claim 10, wherein the processing circuitry (402) is configured to adjust the load on at least one axle (270) of the trailing unit (110-2) by adjusting a suspension parameter associated with the axle (270).

12. A vehicle (100) comprising the computer system (160, 400) of any preceding claim.

13. A computer-implemented method (300) for controlling a vertical load on a coupling (230, 240, 250) between units (110) of a vehicle combination (100) comprising a trailing unit (110-2) and a preceding unit (110-1), wherein the trailing unit (110-2) comprises two or more axles (270) and is coupled to the preceding unit (110-1) via the coupling (230, 240, 250), the method (300) comprising:

   acquiring (302), by processing circuitry (402) of a computer system (160, 400), a current value of a vertical load $F_1$ on the coupling (230, 240, 250);
   determining (304), by the processing circuitry (402), a coupling load capability based on the current value of the vertical load $F_1$ on the coupling (230, 240, 250) and a current value of a virtual wheelbase L of the trailing unit (110-2); and
   determining (306), by the processing circuitry (402), a desired vertical load on the coupling (230, 240, 250) based on the coupling load capability.

14. A computer program product comprising program code for performing, when executed by processing circuitry (402), the computer-implemented method (300) of claim 13.

15. A non-transitory computer-readable storage medium comprising instructions, which when executed by processing circuitry (402), cause the processing circuitry to perform the computer-implemented method (300) of claim 13.

**EP 4 556 266 A1**

**Amended claims in accordance with Rule 137(2) EPC.**

1.  A computer system (160, 400) for controlling a vertical load on a coupling (230, 240, 250) between units (110) of a vehicle combination (100) comprising a trailing unit (110-2) and a preceding unit (110-1), wherein the trailing unit (110-2) comprises two or more axles (270) and is coupled to the preceding unit (110-1) via the coupling (230, 240, 250), the computer system (160, 400) comprising processing circuitry (402) configured to:

    acquire a current value of a vertical load $F_1$ on the coupling (230, 240, 250);
    determine a coupling load capability $F_{1,cap}$ by determining a maximum value $L_{max}$ and/or a minimum value $L_{min}$ of a virtual wheelbase $L$ of the trailing unit (110-2), wherein the virtual wheelbase $L$ of the trailing unit (110-2) is defined as the distance from the coupling (230, 240, 250) to a load centre $G$ of the axles (270) of the trailing unit (110-2); and
    determine a desired vertical load $F_{1,req}$ on the coupling (230, 240, 250) based on the current value of the vertical load $F_1$ on the coupling (230, 240, 250) and the coupling load capability $F_{1,cap}$.

2.  The computer system (160, 400) of claim 1, wherein the current value of the vertical load $F_1$ on the coupling (230, 240, 250) is acquired by a first controller (160-1) associated with the preceding unit (110-1) and transmitted to a second controller (160-2) associated with the trailing unit (110-2).

3.  The computer system (160, 400) of claim 1 or 2, wherein the coupling load capability $F_{1,cap}$ is determined by a second controller (160-2) associated with the trailing unit (110-2) and transmitted to a first controller (160-1) associated with the preceding unit (110-1).

4.  The computer system (160, 400) of any preceding claim, wherein the processing circuitry (402) is configured to determine the coupling load capability $F_{1,cap}$ by determining a maximum value $M_{max}$ and/or a minimum value $M_{min}$ for the payload of the trailing unit (110-2).

5.  The computer system (160, 400) of any preceding claim, wherein the coupling load capability $F_{1,cap}$ comprises a maximum coupling load capability $F_{1,cap,max}$ and/or a minimum coupling load capability $F_{1,cap,min}$.

6.  The computer system (160, 400) of any preceding claim, wherein the desired vertical load $F_{1,req}$ is determined by a first controller (160-1) associated with the preceding unit (110-1) and transmitted to a second controller (160-2) associated with the trailing unit (110-2).

7.  The computer system (160, 400) of any preceding claim, wherein the processing circuitry (402) is configured to determine the desired vertical load $F_{1,req}$ based on a maximum coupling load limit $F_{1,max}$.

8.  The computer system (160, 400) of any preceding claim, wherein the processing circuitry (402) is configured to determine the desired vertical load $F_{1,req}$ based on a desired increase to a load that can be carried by the trailing unit (110-2) and/or a desired redistribution of traction between the trailing unit (110-2) and the preceding unit (110-1).

9.  The computer system (160, 400) of any preceding claim, wherein the processing circuitry (402) is further configured to provide the desired vertical load $F_{1,req}$ by adjusting the load on at least one axle (270) of the trailing unit (110-2) such that the longitudinal position of the load centre $G$ of the axles (270) of the trailing unit (110-2) is translated.

10. The computer system (160, 400) of claim 9, wherein the processing circuitry (402) is configured to adjust the load on at least one axle (270) of the trailing unit (110-2) by adjusting a suspension parameter associated with the axle (270).

11. A vehicle (100) comprising the computer system (160, 400) of any preceding claim.

12. A computer-implemented method (300) for controlling a vertical load on a coupling (230, 240, 250) between units (110) of a vehicle combination (100) comprising a trailing unit (110-2) and a preceding unit (110-1), wherein the trailing unit (110-2) comprises two or more axles (270) and is coupled to the preceding unit (110-1) via the coupling (230, 240, 250), the method (300) comprising:

    acquiring (302), by processing circuitry (402) of a computer system (160, 400), a current value of a vertical load $F_1$ on the coupling (230, 240, 250);
    determining (304), by the processing circuitry (402), a coupling load capability by determining a maximum value

14

$L_{max}$ and/or a minimum value $L_{min}$ of a virtual wheelbase $L$ of the trailing unit (110-2), wherein the virtual wheelbase $L$ of the trailing unit (110-2) is defined as the distance from the coupling (230, 240, 250) to a load centre G of the axles (270) of the trailing unit (110-2); and

determining (306), by the processing circuitry (402), a desired vertical load on the coupling (230, 240, 250) based on the current value of the vertical load $F_1$ on the coupling (230, 240, 250) and the coupling load capability.

13. A computer program product comprising program code for performing, when executed by processing circuitry (402), the computer-implemented method (300) of claim 12.

14. A non-transitory computer-readable storage medium comprising instructions, which when executed by processing circuitry (402), cause the processing circuitry to perform the computer-implemented method (300) of claim 12.

**FIG. 1A**

**FIG. 1B**

EP 4 556 266 A1

EP 4 556 266 A1

FIG. 2A

FIG. 2B

17

<u>300</u>

Acquiring a current value of a vertical load on a coupling between units of a vehicle combination ⟶ 302

Determining a coupling load capability based on the current value of the vertical load and a current value of a virtual wheelbase of the trailing unit ⟶ 304

Determining a desired vertical load on the coupling based on the coupling load capability ⟶ 306

Providing the desired vertical load by adjusting the load on at least one axle of the trailing unit ⟶ 308

**FIG. 3**

400

404

408

412

410

416   418

402

406

414

420

422   424   426

**FIG. 4**

Europäisches
Patentamt
European
Patent Office
Office européen
des brevets

# EUROPEAN SEARCH REPORT

**Application Number**

EP 24 17 7054

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | DE 10 2011 118167 A1 (WABCO GMBH [DE]) 16 May 2013 (2013-05-16) * paragraphs [0002], [0038] - [0041] * ----- | 1-15 | INV. B60G17/052 |
| A | DE 10 2012 015554 A1 (FAHRZEUGBAU KEMPF GMBH [DE]) 13 February 2014 (2014-02-13) * the whole document * ----- | 1-15 | |

**TECHNICAL FIELDS SEARCHED (IPC)**

B60G

The present search report has been drawn up for all claims

| Place of search | Date of completion of the search | Examiner |
|---|---|---|
| The Hague | 28 June 2024 | Schmidt, Nico |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................................................
& : member of the same patent family, corresponding document

EPO FORM 1503 03.82 (P04C01)

**ANNEX TO THE EUROPEAN SEARCH REPORT
ON EUROPEAN PATENT APPLICATION NO.**                EP 24 17 7054

This annex lists the patent family members relating to the patent documents cited in the above-mentioned European search report.
The members are as contained in the European Patent Office EDP file on
The European Patent Office is in no way liable for these particulars which are merely given for the purpose of information.

28-06-2024

| Patent document cited in search report | Publication date | Patent family member(s) | Publication date |
|---|---|---|---|
| DE 102011118167 A1 | 16-05-2013 | DE 102011118167 A1 | 16-05-2013 |
| | | EP 2591928 A2 | 15-05-2013 |
| | | ES 2536241 T3 | 21-05-2015 |
| | | PL 2591928 T3 | 31-07-2015 |
| | | US 2013119637 A1 | 16-05-2013 |
| DE 102012015554 A1 | 13-02-2014 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• EP 23210070